# DEMANDE DE BREVET EUROPEEN

(11) **EP 1 271 818 A1**
(43) Date de publication de la demande: **02.01.2003**
(21) Numéro de dépôt: 02291420.4
(22) Date de dépôt: 07.06.2002
(51) Int. Cl.: H04H 1/00, H04L 27/00, H04L 27/26

(54) **Système et procédé de transmission d'un signal audio ou phonie**

(30) Priorité: 19.06.2001 FR 0108040
(71) Demandeur: Thales, 75008 Paris (FR)
(72) Inventeur: Laurent, Pierre André, Thales Int. Property, 94117 Arcueil Cedex (FR); Demeure, Cédric, Thales Int. Property, 94117 Arcueil Cedex (FR)
(74) Mandataire: Lucas, Laurent Jacques

(57) **Abrégé**

Procédé et dispositif qui utilisent un modem de type numérique pour transmettre des signaux analogiques.

Le modem est de type OFDM, COFDM ou monoporteuse.

Application pour la transmission d'un signal de phonie ou d'audio en toute sécurité.

## Description

La présente invention concerne un dispositif et un procédé de transmission d'un signal analogique en utilisant un modem de type numérique.

Dans la suite de la description, l'expression « modem numérique » désigne un modem qui reçoit en entrée des signaux numériques et qui fournit en sortie des signaux de type numérique. Par exemple, l'invention concerne les modems de type OFDM (abréviation anglo-saxonne de Orthogonal Frequency Division Multiplexing), ou de type COFDM (abréviation anglo-saxonne de Coherent Orthogonal Frequency Division Multiplexing) ou encore de type série.

L'invention s'applique pour des signaux analogiques de type audio ou phonie, éventuellement chiffrés.

Elle s'applique aussi pour des modulations de type OFDM pour les Hautes Fréquences HF (High Frequency) ou des modulations de type monoporteuse pour les Très Haute Fréquence VHF (Very High Frequency), ou encore sur des modulations à étalement de spectre, par exemple par séquence directe ou EVF (Evasion Frequency). Une modulation monoporteuse peut aussi être utilisée en HF et une modulation OFDM en VHF.

L'art antérieur décrit différents procédés permettant de transmettre sur voie radio un signal de phonie ou audio en toute sécurité. Ils peuvent typiquement être classifiés en deux grandes familles :

### 1 - Le procédé analogique, plus souvent appelé embrouilleur ou en anglais « scrambler ».

Ce type de procédé a été très utilisé dans les gammes HF et VUHF. Le système associé se compose d'un boîtier, externe ou interne au poste radio, qui s'interpose entre le combiné et le poste radio.

Le principe consiste à mélanger le signal, typiquement, suivant un pavage temps-fréquence réalisé à partir d'une transformée de Fourier du signal d'entrée. On ajoute en général un élément de synchronisation sous la forme de l'addition d'un signal modulé à une fréquence porteuse dans la bande audio qui contient les informations nécessaires en réception, afin de synchroniser le procédé de chiffrement. Une fois le signal mélangé et donc difficile, voire impossible à comprendre, il est ensuite transmis en utilisant des méthodes classiques choisies selon la gamme de fréquence envisagée (SSB Single Side Band, AM amplitude modulation, FM frequency modulation, .....).

Le principe présente certains inconvénients, notamment, une faible résistance et d'éventuelles dégradations liées aux interférences. Un autre désagrément est que le signal de synchronisation rajouté n'est pas toujours audible. Ce procédé n'est donc pas très résistant à des attaques de déchiffrement non coopératives, en particulier à cause de la limitation du nombre des sous-bandes de fréquence mélangées en fonction du nombre de points pris dans la FFT (abréviation anglo-saxonne de Fast Fourier Transformation). En revanche, tant que la synchronisation du chiffre est détectée à la réception, il est possible de désembrouiller le signal reçu (déscrambler en anglais) et donc de restituer un signal audible même à faible rapport signal sur bruit, S/B. L'oreille humaine étant un récepteur très robuste, elle reconstitue assez bien le signal auditif même lorsque celui-ci est fortement bruité.

### 2 - Le procédé numérique

Il est aussi connu de numériser le signal de phonie ou le signal audio, de le comprimer en utilisant un vocodeur ou un compresseur audio et ensuite d'utiliser un modem numérique afin de transmettre les éléments binaires qui sont au préalable chiffrés au moyen d'un chiffre numérique de haute sécurité.

Cela permet l'utilisation de chiffre de haute qualité, mais cela pose certains problèmes de débit. En HF, par exemple, car le débit disponible dans la bande classiquement allouée, 3 KHz, dans un mode de transmission numérique qui résiste aux multitrajets (typiquement avec une efficacité spectrale de 1 bit/Hz/s) est limité.

De plus, des limitations existent lorsque le canal de propagation du signal est très perturbé. Ceci nécessite l'utilisation d'un entrelacement et d'un code correcteur d'erreurs qui limitent le débit, la limitation maximum étant de l'ordre de 2,4 Kbits/s. Le vocodeur est de fait bas débit et donc de qualité moyenne. Il est même possible de réduire encore plus le débit jusqu'à 800 bits/s, avec un vocodeur de qualité moindre et un codage plus robuste.

Dans ce deuxième cas, il reste toutefois le fait que le modem possède un point de fonctionnement en Taux d'Erreur Binaire (TEB) adapté au vocodeur et donc un certain rapport signal/bruit, S/B, qui dépend du canal de transmission. En deçà de cette valeur de rapport Signal/Bruit, les erreurs sont trop nombreuses pour que le décodeur puisse les corriger et les signaux produits en sortie du vocodeur ne sont plus audibles même si le modem est toujours capable de garder la synchronisation car celle-ci est en général extrêmement robuste.

Il existe aussi des principes de codage hiérarchiques permettant de mieux protéger, soit les éléments binaires les plus sensibles, soit les éléments permettant une reconstitution à qualité minimale du signal transmis. Les systèmes mettant en oeuvre ces principes montrent en revanche leurs limites assez rapidement. La qualité est assez médiocre et/ou le décrochage en Signal/Bruit apparaît finalement assez vite.

Des systèmes de type similaire existent en VHF avec des modulations plutôt de type monoporteuse permettant d'optimiser le facteur crête (rapport puissance crête sur puissance moyenne) et donc le rendement de l'amplificateur de sortie.

L'invention repose sur une nouvelle approche qui consiste notamment à transmettre un signal analogique en utilisant un modem de type numérique.

Le signal analogique est transmis en tant que symboles ou cellules appliqués à une modulation classique numérique.

L'invention concerne un procédé de transmission d'un signal analogique dans un système de transmission comprenant initialement des échantillons numériques (symboles ne pouvant prendre qu'un nombre de valeurs données). Il est caractérisé en ce que l'on remplace les échantillons numériques originaux pour les données par le signal analogique à transmettre.

Il comporte par exemple une étape de pré-traitement du signal analogique avant sa transmission et une étape de post-traitement à la réception.

Il peut utiliser un modem de type OFDM ou COFDM, le signal analogique étant émis par exemple sous la forme de N cellules temps-fréquence modulées indépendamment.

Le signal analogique est, par exemple, échantillonné à une fréquence Fe et les N échantillons obtenus sont répartis selon une loi de distribution fixée dans les cellules.

Il peut utiliser un modem de type monoporteuse continue.

Les étapes du procédé précité s'appliquent par exemple à la transmission d'un signal analogique de type phonie ou audio.

L'invention concerne aussi un dispositif de transmission d'un signal analogique caractérisé en ce qu'il comporte au moins un modem de type numérique (comprenant initialement des échantillons numériques ou symboles pouvant prendre des valeurs données) adapté à recevoir des signaux analogiques.

Il peut comporter un dispositif adapté à appliquer un pré-traitement avant l'émission du signal analogique et un dispositif de post-traitement du signal à la réception.

Le modem est par exemple de type OFDM ou COFDM et le dispositif peut comporter un dispositif d'échantillonnage du signal analogique et un module adapté à distribuer les échantillons du signal selon une loi de répartition fixée dans les cellules temps-fréquence du modem.

Le modem peut aussi être de type monoporteuse.

L'objet de la présente invention présente notamment les avantages suivants :
- un fonctionnement correct pour des valeurs de rapport signal/bruit, S/B, très faibles,
- une continuité de service quelques soient les conditions de réception, contrairement à ce qu'offre un procédé purement numérique,
- une simplicité de mise en oeuvre,
- un chiffrement de haute qualité numérique (protection parfaite),
- une économie de moyens : on utilise juste ce qu'il faut d'échantillons complexes pour transmettre le signal analogique, à savoir N échantillons par seconde si le signal a une fréquence maximale à transmettre de N Hz. Ceci minimise l'occupation spectrale ou maximise l'efficacité spectrale,
- la possibilité d'adjoindre des procédés annexes destinés à améliorer la qualité du signal analogique à la réception sans difficultés puisque le système comporte déjà une majorité de traitements numériques élaborés,
- l'assurance d'une qualité de signal audio à la réception qui reste constante à rapport Signal/Bruit donné, contrairement à de la modulation d'amplitude (AM) classique :
   - une absence de « coloration » due au fading sélectif (compensation du gain du canal),
   - aucune distorsion due à la disparition temporaire de la porteuse résiduelle comme pour l'AM,
- une décorrélation des perturbations dues aux brouilleurs, grâce à l'entrelacement, qui rend leur effet similaire à du bruit impulsif donc à spectre plat,
- une synchronisation apportée par la modulation utilisée et la correction des dégradations apportées par le canal,
- l'utilisation d'une étape de pré ou de post accentuation qui permet aussi de rendre le signal transmis moins sensible au bruit,
- la possibilité d'étendre le procédé à de nombreux types de procédé de modulation (OFDM, monoporteuse, étalement de spectre,...)
- une compatibilité avec les modes burst-paquet (EVF, TDMA Time division Multiple Access,...)
- une discrétion : le signal émis ressemble à une modulation numérique classique.

D'autres caractéristiques et avantages apparaîtront à la lecture de la description détaillée d'un mode de réalisation, pris à titre d'exemple illustratif et nullement limitatif, illustré par les dessins annexés qui représentent :
- La figure 1 un schéma d'un modem de type COFDM dans un espace temps-fréquence,
- Les figures 2 et 3, les synoptiques respectivement de la partie émission et de la partie réception pour un dispositif avec un modem de type COFDM,
- La figure 4 une représentation d'un modem de type monoporteuse,
- La figure 5 différentes courbes comparatives de la qualité du signal, obtenues par mise en oeuvre des techniques connues de l'art antérieur et celle de la présente invention.

Afin de mieux faire comprendre les principes mis en oeuvre dans la présente invention, la description qui suit est relative dans un premier temps à la transmission d'un signal analogique en utilisant un modem de type COFDM.

Le procédé repose sur l'idée suivante, dans un système de transmission comprenant initialement des échantillons numériques (symboles ne pouvant prendre qu'un nombre de valeurs données), on remplace les échantillons numériques originaux à la disposition de l'utilisateur par le signal analogique audio ou de phonie. Le signal analogique prend ainsi la place desdits échantillons numériques originaux.

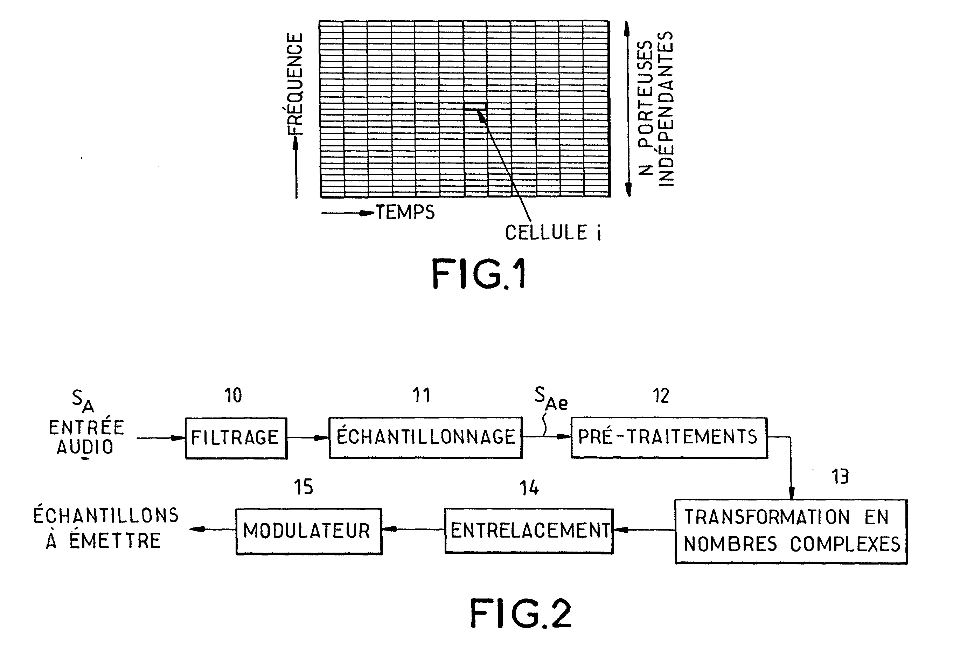

La figure 1 représente un schéma d'un modem dans un espace temps-fréquence.

Ce modem peut être décrit comme une juxtaposition dans toute la bande d'émission d'une multitude, par exemple plusieurs centaines de modems élémentaires à bande étroite.

La représentation consiste à considérer un espace bi-dimensionnel temps-fréquence (axe des abscisses, axe des ordonnées) divisé en cellules élémentaires indépendantes. Chaque cellule d'indice i est caractérisée par une fréquence Fi donnée pour un instant ti donné. Une cellule d'indice i est associée à un nombre complexe qui correspond directement à l'amplitude A(t) et à la phase ϕ (t) qui lui sont assignés par la modulation utilisée. Le signal modulé S(t) est égal à A(t)cos(ωt+ϕ(t)).

Les cellules élémentaires peuvent avoir des fonctions ou des rôles différents, par exemple :
- certaines ont un contenu fixe connu du récepteur. Elles servent aux diverses synchronisations nécessaires telles que, la synchronisation temporelle, la synchronisation fréquentielle, ainsi qu'à l'évaluation continue des caractéristiques du canal qui peuvent varier avec le temps, par exemple le gain complexe en fonction de la fréquence (fonction essentiellement des caractéristiques du canal de transmission), le rapport signal/bruit sur chaque fréquence, ce dernier pouvant aussi varier en fonction du niveau du signal reçu mais aussi à cause des interférences, etc...
- d'autres cellules ont un rôle « utilitaire » (servitudes). Elles contiennent toutes les informations qui permettent au récepteur de déterminer les caractéristiques du signal qu'il est en train de recevoir, le type de codeur audio utilisé, la station d'émission, la liste des fréquences sur lesquelles il peut recevoir la même station en cas de dégradation de la réception,..etc..
- toutes les autres cellules, la grande majorité en général, sont disponibles et utilisées pour transmettre les informations utiles, qui pour la plupart dans ce genre d'application, correspondent à un signal audio fréquence numérisé. Ce sont ces cellules disponibles ou cellules libres qui vont être utilisées pour mettre en oeuvre le procédé selon l'invention.

Toutes les cellules disponibles sont utilisées pour transmettre un signal analogique échantillonné. Les cellules seront donc utilisées, en totalité ou au moins en majorité, pour transmettre uniquement des échantillons analogiques d'un signal de parole ou plus généralement d'un signal audio, afin d'optimiser au maximum l'efficacité spectrale et proposer un service classique de transmission de phonie ou d'audio.
Ceci permet d'obtenir les ordres de grandeur suivants :
- Pour un signal de parole (largeur de bande 300Hz-3KHz par exemple) on a donc 2700 échantillons complexes par seconde, si on limite au strict minimum la fréquence d'échantillonnage. En prenant un dimensionnement classique en OFDM pour tenir un canal HF avec 5 ms d'étalement temporel et 2 Hz d'étalement Doppler, on obtient des cellules OFDM de durée 30 ms environ (dont 5 ms de temps de garde) soit 40 Hz d'écartement entre porteuses et donc 75 porteuses utiles dans un canal HF de 3 KHz de bande. Cela donne 75*33=2475 cellules. En prenant 10% des cellules utilisées aux servitudes et aux différentes synchronisations, cela impose un procédé de compression « léger », de taux 2227/2700=0,82, qui est facilement obtenu par un pré-traitement (et le post traitement associé) de compression du signal (en fréquence par exemple),
- Pour un signal audio (dit en bande élargie) de type 50 Hz-16 KHz, on obtient de l'ordre de 16 000 échantillons complexes, soit pour un canal HF une largeur de bande de l'ordre de 18 KHz sans compression.

Dans un tel système, un entrelacement de longueur temporelle importante doit être conservé afin de pouvoir résister aux fluctuations du canal.

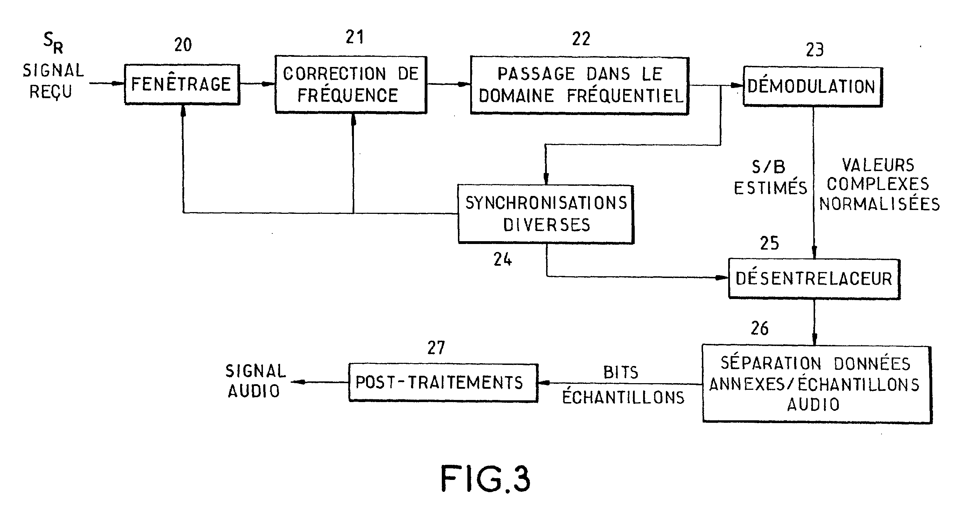

Les figures 2 et 3 représentent respectivement les synoptiques pour la partie émission et pour la partie réception d'un système selon l'invention adapté pour la transmission d'un signal analogique utilisant un modem de type COFDM.

Le signal analogique, ou entrée audio SA, passe à travers les éléments suivants composant la partie émission (figure 2) :
- Un filtre 10 passe-bande, destiné à limiter la bande passante du signal audio pour obtenir le signal audio filtré.
- Un système d'échantillonnage 11 du signal audio filtré. Ce dernier est par exemple échantillonné à une fréquence Fe garantissant une bande passante suffisante pour ne pas perdre en qualité, ce qui fixe un nombre minimum Nₘᵢₙ de cellules à affecter à cette fonction. L'utilisation d'une fréquence réduite, par exemple comprise entre 4 et 8 KHz peut être suffisante, le signal échantillonné est référencé S_{Ae}.
- Un dispositif 12 adapté à effectuer un ou plusieurs pré-traitements simples, comme de la pré-accentuation, ou encore des traitements plus complexes tels que la distorsion linéaire (ou LinCompEx, abréviation anglo-saxonne de Linear Completion and Expansion) procédé où le signal subit une compression de dynamique et est transmis, accompagné d'un train binaire robuste (correspondant à des données annexes) décrivant l'état de compression.

En l'absence de données annexes, le signal audio contient 2Na échantillons réels si Na cellules ont été réservées pour sa transmission. Autrement, pour B bits de données annexes, le signal audio contiendra 2Na-B/2 échantillons par exemple.
- Un dispositif 13 adapté à transformer les échantillons audio réels ou binaires en échantillons complexes par exemple de la manière suivante, deux échantillons audio successifs S(2n), S(2n+1) forment respectivement la partie réelle et la partie imaginaire du n^{ième} échantillon complexe. Ces techniques étant connues de l'Homme du métier ne seront pas détaillées dans la présente description.
- Un entrelaceur 14 qui a pour fonction de disperser les points complexes obtenus par le dispositif 13 de transformation en nombres complexes, dans l'espace temps-fréquence afin de limiter l'effet des paquets d'erreurs lors de la réception. Cela permet au signal audio de bénéficier des mêmes avantages qu'un signal purement numérique en termes de décorrélation du bruit et de déstructuration du brouillage. Elle est aussi indispensable afin de conserver au signal un spectre en fréquence plat, identique à celui d'un signal purement numérique.
- Un modulateur 15, par exemple, de type COFDM appartenant à la famille prédéfinie sous l'expression modem de type numérique. Ce modem a notamment pour fonction de former le signal à transmettre. A partir de l'ensemble des signaux complexes, qui étaient jusque là dans le domaine fréquentiel, le modulateur génère le signal temporel, par exemple par transformée de Fourier discrète inverse, ajoute des signaux de garde et effectue des post-traitements divers, tels que l'écrêtage, le filtrage, etc., avant de piloter l'émetteur de puissance.

Le signal est ensuite reçu et traité par la partie réception et selon les étapes décrites en relation avec la figure 3.

Le signal SR reçu par la partie réception est supposé avoir déjà subi tous les traitements classiques de réception : amplification, filtrages, régulation de niveau, CAG (contrôle automatique de gain), passage en bande de base. Il se présente alors sous la forme d'échantillons temporels complexes.

Les échantillons sont envoyés pour être traités dans les différents éléments listés ci-après :
- Un dispositif 20 adapté à réaliser un fenêtrage. Le fenêtrage est chargé de prélever dans le signal SR une partie réputée stable, c'est-à-dire une partie où sont simultanément présentes sensiblement toutes les répliques du signal reçu. Chaque réplique a son propre retard, sa propre phase et sa propre amplitude. Ceci est caractéristique des canaux de transmission dans les bandes de fréquence utilisées et correspond au phénomène bien connu sous le terme de multi-trajets.
- Un dispositif 21 adapté à effectuer une correction de fréquence. La correction de fréquence est destinée à compenser à la fois les dérives en fréquence des émetteurs et des récepteurs mais aussi le décalage Doppler éventuel dû à une variation de la distance émetteur-récepteur et un décalage en fréquence temporaire moyen de tous les trajets reçus.
- Un dispositif 22 adapté à réaliser le passage dans le domaine fréquentiel, au moyen par exemple d'une transformée de Fourier discrète.
- Un système de démodulation 23 cohérente et un système 24 adapté pour effectuer des synchronisations diverses travaillent de concert pour à la fois :
   - Bien estimer le décalage en fréquence résiduel à compenser,
   - Bien positionner la fenêtre de réception,
   - Estimer pour chaque échantillon complexe de sortie sa valeur complexe telle qu'elle était à l'émission (valeur complexe normalisée après estimation et compensation du gain complexe du canal) ainsi que le rapport signal/bruit, lequel dépend à la fois du temps (canal non stationnaire) et de la fréquence (canal sélectif en fréquence, présence de brouillages à bande plus ou moins étroite).
   Le système de démodulation reçoit les échantillons de signal après passage dans le domaine fréquentiel.
- Un désentrelaceur 25 ayant pour fonction de remettre dans l'ordre original les échantillons complexes issus du dispositif de démodulation et accompagnés de leurs valeurs de rapport S/B estimés, il reçoit aussi les synchronisations diverses,
- Un démultiplexeur 26 qui sépare les échantillons purement « numériques » correspondant aux servitudes, à la synchronisation et aux données de contrôle de l'audio analogique, de ceux affectés à la liaison « audio analogique », en sortie on dispose des échantillons composant le signal audio final qui sont transmis à,
- Un dispositif 27 adapté à effectuer des post-traitements qui exploitent éventuellement les données de contrôle précitées et effectuent les traitements inverses de ceux faits à l'émission (lors du pré-traitement), ainsi que d'autres traitements tels que, par exemple, la réjection du bruit de fond.

Grâce à la compensation du gain du canal effectuée par le démodulateur 23, le niveau du signal ne varie pas avec le gain du canal, contrairement à une transmission de type AM ou SSB classique (abréviation anglo-saxonne de Single Side Band), et, de plus, le spectre en fréquence du bruit additionnel est quasiment plat à court terme, c'est-à-dire qu'il est uniformément réparti dans la bande audio (bruit blanc mais pas obligatoirement gaussien) et peut facilement être éliminé par des procédés classiques, par exemple une soustraction spectrale.

La réduction "perceptuelle" du bruit peut aussi être considérablement améliorée par une modification du spectre en fréquence du signal audio à l'émission associée à la modification inverse à la réception. Ces modifications ont pour effet de masquer le bruit en s'arrangeant pour que son intensité soit toujours inférieure à celle du signal audio utile et ceci quelle que soit la fréquence audio considérée.

Les pré-traitements et les post-traitements peuvent être effectués selon les méthodes décrite dans la référence intitulée "Spectral Amplitude Warping (SAW) for noise Spectrum Shaping in Audio Coding » de Roch Lefebvre et Claude Laflamme, University of Sherbrooke, Quebec, Canada, J1K 2R1, disponible à l'adresse internet suivante lefebvre@gel.usherb.ca.

Le procédé selon l'invention s'applique, par exemple, dans un dispositif émetteur-récepteur comportant un modem de type monoporteuse.

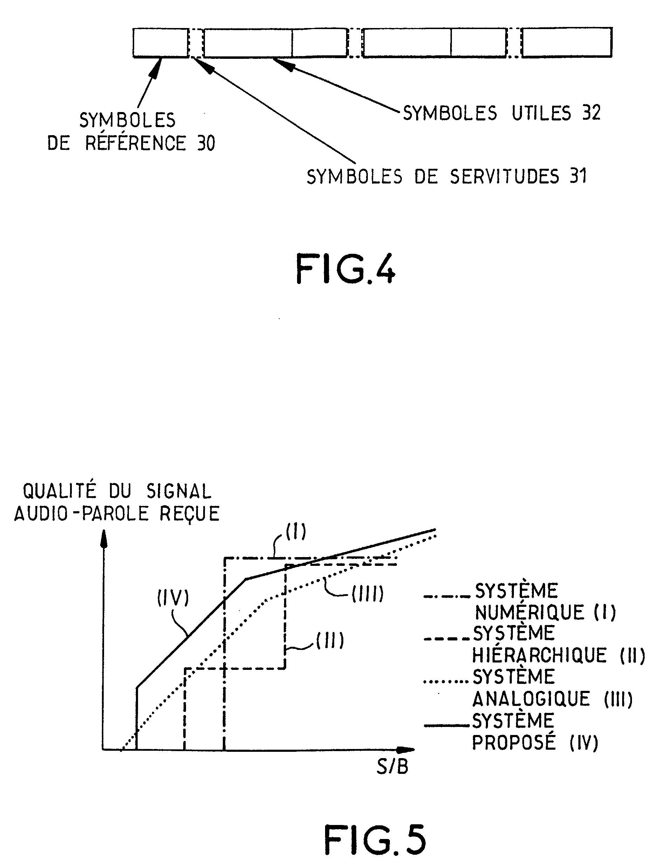

La figure 4 montre un schéma classique de construction d'une modulation continue monoporteuse.

La modulation comporte des symboles de référence 30, des symboles de servitudes 31 et des symboles utiles 32, répartis dans différents blocs en série.

Le signal analogique audio à transmettre est distribué au niveau des symboles utiles 32. Les symboles de référence 30 servent à faire une estimation des conditions de propagation qui est ensuite utilisée pour compenser des fluctuations (ou égalisation). Les symboles de servitude 31 sont modulés en numérique et contiennent des informations servant au récepteur pour déterminer les traitements à effectuer, par exemple en fonction du service et des traitements effectués à l'émission. Par exemple, le récepteur détermine les caractéristiques du signal qu'il est en train de recevoir (entrelacement utilisé, synchronisation, chiffre, etc.). Ils peuvent se trouver répartis dans la trame comme le représente la figure 3 ou encore être concentrés, par exemple dans le préambule, en début de communication et/ou répétés afin de pouvoir recevoir la totalité des données tout en ayant manqué le début de la communication.

Le calcul de la bande nécessaire à transmettre un signal de phonie ou audio est effectué en tenant compte de la proportion de symboles utilisés à autre chose qu'à véhiculer des échantillons du signal analogique à transmettre et consiste par exemple à augmenter d'autant la vitesse de modulation et donc la bande occupée.

En reprenant l'hypothèse précédente de 10% de symboles utilisés pour les servitudes, le rythme de modulation obtenu est de type 3000 bauds soit environ 3 KHz. Ceci peut varier en fonction de la largeur de bande du filtre d'émission utilisé.

Il est aussi possible d'utiliser plus de symboles de référence, ce qui rend l'estimation de canal en réception plus robuste et de fait, permet de résister à des canaux de propagation plus difficile (cas typique en HF). La répartition temporelle de ces symboles peut également être de diverses formes, par exemple les normes OTAN STANAG 4285 ou 4539 connues de l'Homme du métier.

Les schémas des parties émetteurs et récepteurs sont similaires à utilisés pour une modulation de type OFDM en replaçant dans la chaîne de modulation la FFT inverse et l'insertion des échantillons de garde par un modulateur monoporteuse et du côté réception la FFT et la correction du gain du canal par un égaliseur (linéaire, bloc,..).

Selon une autre variante de réalisation de l'invention, le procédé est appliqué pour un modem à étalement de spectre. Il comporte les étapes décrites précédemment et une étape où la modulation monoporteuse est ensuite « étalée» par une multiplication au moyen d'un code d'étalement qui permet en réception de profiter de la diversité de propagation large bande.

La figure 5 représente, dans un diagramme qualité du signal de sortie (axe des ordonnées), signal/bruit (axe des abscisses), différentes courbes représentatives de l'évolution de la qualité du signal de sortie en fonction des différents systèmes existants dans l'art antérieur, le système numérique (courbe I), le système hiérarchique (courbe II), le système analogique (courbe III) et le système selon l'invention (courbe IV). Ces courbes montrent bien la meilleure qualité obtenue en utilisant le système selon l'invention .

On peut noter que les systèmes numériques fonctionnent avec une qualité indépendante de la valeur du signal/bruit reçu jusqu'à la rupture complète qui intervient assez tôt même si les systèmes hiérarchiques fonctionnent avec un palier intermédiaire. La différence entre les systèmes analogiques et le système proposé réside dans la résistance de ce dernier aux propagations perturbées car le traitement numérique en réception permet d'égaliser le canal et donc de mieux reconstituer le signal original.

## Revendications

1. Procédé de transmission d'un signal analogique dans un système de transmission comprenant initialement des échantillons numériques (symboles ne pouvant prendre qu'un nombre de valeurs données) **caractérisé en ce que** l'on remplace les échantillons numériques originaux par le signal analogique à transmettre.

2. Procédé selon la revendication 1 **caractérisé en ce qu'**il comporte une étape de pré-traitement du signal analogique avant sa transmission et une étape de post-traitement à la réception.

3. Procédé selon l'une des revendications 1 et 2 **caractérisé en ce qu'**il utilise un modem de type OFDM ou COFDM et **en ce que** le signal analogique est émis sous la forme de N cellules temps-fréquence modulées indépendamment.

4. Procédé selon la revendication 3 **caractérisé en ce que** le signal analogique est échantillonné à une fréquence Fe et **en ce que** les N échantillons obtenus sont répartis selon une loi de distribution fixée dans les cellules.

5. Procédé selon l'une des revendications 1 et 2 **caractérisé en ce qu'**il utilise un modem de type monoporteuse continue.

6. Application du procédé selon l'une des revendications 1 à 5 à la transmission d'un signal analogique de type phonie ou audio.

7. Dispositif de transmission d'un signal analogique **caractérisé en ce qu'**il comporte au moins un modem de type numérique adapté à recevoir des signaux analogiques.

8. Dispositif selon la revendication 7 **caractérisé en ce qu'**il comporte un dispositif adapté à appliquer un pré-traitement avant l'émission du signal analogique et un dispositif de post-traitement du signal à la réception.

9. Dispositif selon l'une des revendications 7 et 8 **caractérisé en ce que** le modem est de type OFDM ou COFDM.

10. Dispositif selon la revendication 9 **caractérisé en ce qu'**il comporte un dispositif (11) d'échantillonnage du signal analogique et un module adapté à distribuer les échantillons du signal selon une loi de répartition fixée dans les cellules temps-fréquence du modem.

11. Dispositif selon l'une des revendications 7 et 8 **caractérisé en ce qu'**il comporte un modem de type monoporteuse.
